# FASCICULE DE BREVET EUROPEEN

(11) **EP 1 856 633 B1**
(45) Date de publication et mention de la délivrance du brevet: **16.04.2014**
(21) Numéro de dépôt: 06709460.7
(22) Date de dépôt: 31.01.2006
(51) Int. Cl.: G06F 17/30

(54) **PROCEDE DE TRAITEMENT DE DONNEES EN VUE DE L'EXTRACTION DES ATTRIBUTS PRINCIPAUX D'UN PRODUIT**
DATENVERARBEITUNGSVERFAHREN ZUM HERAUSARBEITEN DER HAUPTEIGENSCHAFTEN EINES PRODUKTS
METHOD OF PROCESSING DATA IN ORDER TO EXTRACT THE MAIN ATTRIBUTES OF A PRODUCT

(30) Priorité: 07.03.2005 FR 0550596
(43) Date de publication de la demande: 21.11.2007
(73) Titulaire: Sight'Up, 38690 Torchefelon (FR)
(72) Inventeur: BIGALET, Franck, F-38690 Torchefelon (FR)
(74) Mandataire: Vuillermoz, Bruno
(86) Numéro de dépôt international: PCT/FR2006/050076
(87) Numéro de publication internationale: WO 2006/095102

(56) Documents cités:
- US-A1- 2004 236 725
- INTERNATIONAL BUSINESS MACHINES CORPORATION: "Extracting salient keywords in a document that belong to a specific context" RESEARCH DISCLOSURE, KENNETH MASON PUBLICATIONS, WESTBOURNE, GB, vol. 465, no. 183, janvier 2003 (2003-01), XP007132127 ISSN: 0374-4353

## Description

### Domaine technique

La présente invention concerne un procédé de traitement de données représentatives d'un produit en vue de son indexation et son accès par des moteurs de recherche avec une pertinence accrue.

L'invention trouve une application toute particulière, mais non limitative, au traitement des données représentatives des produits mis en vente par des sites marchands sur le réseau Internet. Par "produit", on entend, bien entendu, non seulement les produits manufacturés, mais également les services pouvant faire l'objet d'une offre commerciale, et dont l'achat peut également se réaliser par voie télématique.

Dans la suite de la description, l'invention sera donc décrite en relation avec des exemples liés à cette application spécifique, sans toutefois y être limitée.

### Techniques antérieures

Le document "Extracting salient keywords in a document that belong to a specific context", RESEARCH DISCLOSURE, KENNETH MASON PUBLICATIONS, WESTBOURNE, GB, vol. 465, no. 183, janvier 2003 (2003-01), décrit un procédé pour extraire des mots clé principaux d'un document en utilisant des glossaires spécifiques pour des contextes différents.

A ce jour, les sites marchands proposant la vente de produits et services sur le réseau Internet trouvent un intérêt à relayer leurs offres par des moteurs de recherche spécialisés mis à disposition par des sites de référencements. Ces moteurs de recherche spécialisés proposent à l'acheteur différentes catégories de produits et services, et permettent à l'acheteur potentiel d'effectuer une recherche à partir de mots clefs correspondant à des caractéristiques du produit.

Pour ce faire, le site de référencement collecte les données représentatives des produits commercialisés par les différents sites marchands, et en détermine les caractéristiques principales qui pourront faire l'objet de recherche par mot clef.

On conçoit que ce traitement est une opération relativement complexe, car elle dépend éminemment de la langue employée pour la description du produit, du vocabulaire relatif à une catégorie d'articles, ainsi que la syntaxe employée.

Ainsi, à ce jour, l'extraction des attributs ou caractéristiques d'un produit se sont fait par une analyse manuelle et systématique de l'ensemble des offres. Ce traitement permet de caractériser chaque produit par des attributs, autorisant le classement de ces produits dans différentes catégories. Les différents produits sont ensuite catalogués dans les bases de données qui permettent leur accès par sélection des différents champs de la base de données.

Plus précisément, certains sites marchands qui exploitent des bases de données particulières permettent d'affiner le choix de l'acheteur en autorisant le choix de critères optionnels dépendants des critères déjà saisis.

On conçoit que ces techniques d'extraction des caractéristiques sont particulièrement fastidieuses, puisqu'elles nécessitent une analyse individuelle et manuelle de chacun des produits dont l'offre est soumise par le site marchand. De plus, la classification des différents produits dans des bases de données n'est pas techniquement réellement satisfaisante. En effet, la structuration des offres dans des bases de données est relativement adaptée aux produits à caractère technique, par exemple dans le domaine informatique, puisque chaque produit présente des caractéristiques en nombre limité, qui peuvent être déclinées dans un choix relativement restreint.

En revanche, cette classification en bases de données n'est pas adaptable à des produits appartenant à des secteurs où l'offre est extrêmement variée et diffuse. On peut notamment citer à titre d'exemple le domaine de l'habillement. La structuration en bases de données, figeant en quelque sorte les caractéristiques potentielles d'un produit, ne rend pas ce mécanisme adaptable aux marchés à forte évolution.

En outre, on a constaté que ce mode d'extraction des caractéristiques d'un produit présente des déficiences en terme de pertinence.

Ainsi, dans la description suivante : *"couverture 75 x 100, en laine polaire uni, livrée dans un sac PVC 100 % polyester"* les termes "couverture" et "sac" correspondent tous deux à une définition potentielle du type d'articles. Le produit ainsi décrit est donc considéré avec les techniques actuelles comme étant à la fois une "couverture" et un "sac". Ce résultat n'est bien entendu pas pertinent puisque l'article ainsi décrit est une couverture et non pas un sac, qui constitue un accessoire de la vente. Le même type de raisonnement s'obtient pour une description d'articles telle que *"robe noire avec une ceinture rouge"* dans laquelle les méthodes actuelles déterminent comme mots clefs les termes "ceinture" et "rouge", qui correspondent à des caractéristiques d'un accessoire à l'article principal, qui est une "robe noire".

Autrement dit, les techniques existantes présentent une déficience en terme de pertinence.

Un objectif de l'invention est de permettre d'améliorer la pertinence d'indexation, en traitant de façon plus appropriée les cas de figures où la description d'un produit comprend plusieurs mots appartenant à un même type d'attribut, et dans lequel seulement un de ces mots est représentatif d'une caractéristique importante du produit.

Un autre objectif de l'invention est de fournir un procédé qui puisse s'adapter simplement à différentes langues concernant la description des produits.

### Exposé de l'invention

L'invention concerne donc un procédé de détermination des caractéristiques principales d'un produit défini par une description combinant une pluralité de mots.

Ce procédé combine plusieurs étapes successives.

Tout d'abord, pour chaque mot de la description, on détermine s'il appartient à un glossaire prédéterminé. Par la suite, pour chacun des mots appartenant à un glossaire on effectue les opérations suivantes.

Dans une première étape, on affecte à ce mot une pluralité de codages. Ces codages sont élaborés en fonction du glossaire prédéterminé auquel appartient le mot considéré, ainsi que des glossaires auxquels les autres mots de la description appartiennent, le cas échéant.

Dans une deuxième étape, on analyse avec un catégorisateur bi-classe l'ensemble de ces codages élaborés pour le mot en question, de manière à déterminer si le mot considéré est un attribut principal du produit.

Ainsi, l'extraction des attributs ou caractéristiques d'un produit se fait par comparaison des mots de sa description avec des glossaires. Ces glossaires sont des ensembles de mots relatifs à un type de caractéristiques du produit. Chaque catégorie d'articles possède donc des caractéristiques particulières. Ainsi, à titre d'exemple, dans la catégorie des articles d'habillement, il existe différents glossaires regroupant chacun le type de vêtements, la couleur, la matière, ou d'autres caractéristiques spécifiques à un article d'habillement.

La méthode mise en oeuvre par l'invention nécessite l'emploi des glossaires, résultant d'un inventaire manuel aussi exhaustif que possible des termes relatifs à la qualité du glossaire considéré, dans un échantillon représentatif le plus réduit possible.

De façon globale, l'ensemble des descriptions de produits est soumis à une comparaison avec ces différents glossaires. En cas de concordance d'un terme de la description avec un des mots d'un des glossaires, le terme ainsi identifié est alors considéré comme définissant un attribut potentiel, correspondant au glossaire auquel il appartient.

Autrement dit, l'invention consiste à effectuer un traitement sur chaque description qui ne se limite pas à la simple recherche de concordance avec des termes d'un glossaire, mais qui, au-delà, effectue un ensemble d'opérations destinées à éliminer les cas non pertinents d'appartenance à un glossaire. Plus précisément, à chacun des termes susceptibles de constituer un attribut essentiel du produit, car appartenant à un glossaire, on associe un certain nombre de codages. Ces codages sont élaborés en fonction des autres termes de la description qui appartiennent à des glossaires. De la sorte, il est possible de détecter les cas de figures où l'appartenance à un glossaire ne signifie pas systématiquement pour un mot qu'il représente une caractéristique principale du produit.

A titre d'exemple, la présence dans la description de deux mots susceptibles de représenter un type d'article est un risque d'erreur dans la détermination de l'attribut "type" de l'article. Ainsi, dans l'expression *"Robe noire avec une ceinture rouge"*, les termes "Robe" et "ceinture" sont tous deux représentatifs de type de vêtements, bien que seul le terme "robe" corresponde au type d'article réel en question. La détermination de la position à l'intérieur de la description de chacun des mots relatifs à un type d'article peut permettre de discriminer les cas de figures, et d'affecter à l'attribut "type" le terme qui est effectivement pertinent et en l'espèce le mot "robe".

L'analyse des différents codages affectés à un mot donné permet ainsi, avec des techniques d'auto-apprentissage, de confirmer que le mot en question est bien une caractéristique de produit, pour le type de glossaire auquel il appartient. A l'inverse il permet d'éliminer les cas où il correspond à une caractéristique d'un accessoire de l'article, ou bien encore d'une caractéristique auxiliaire.

En pratique, le traitement conforme à l'invention peut avantageusement passer par une première étape consistant à substituer, dans la description, les mots appartenant à un glossaire, par le nom dudit glossaire, de manière à élaborer les codages caractéristiques par l'analyse de cette description après substitution.

En d'autres termes, le traitement conforme à l'invention peut se faire sur une description dans laquelle les termes appartenant à un glossaire ont été remplacés par le nom même du glossaire. Dans cette description substituée, les termes caractéristiques ne sont plus présents, et leur pertinence est donc déterminée en fonction de la position par rapport aux autres termes de la description, qui peuvent eux-mêmes avoir été substitués.

Pour atteindre un niveau plus élevé de performances, il peut être avantageux de générer des codages supplémentaires. Ainsi, pour chaque mot appartenant à un glossaire déterminé, on peut affecter audit mot une pluralité de codages complémentaires qui sont élaborés en fonction du glossaire prédéterminé auquel appartient le mot considéré, et ainsi que des autres mots de la description.

Ces codages complémentaires sont donc élaborés en fonction des autres mots de la description, et non pas en fonction des glossaires auxquels ces mots appartiennent. Ces codages complémentaires sont donc effectués en prenant en compte la description avant les opérations de substitution évoquées ci-avant.

En pratique, de multiples codages plus ou moins complexes peuvent être employés. Ces codages peuvent être combinés entre eux selon une logique spécifique de l'invention.

En effet, le procédé peut comporter une étape de sélection d'un nombre restreint de codages, choisis parmi un groupe de codages potentiels. En effet, il peut être utile de ne retenir que certains codages particuliers qui permettent de discriminer certains cas plus pertinents.

En pratique, la sélection de ces différents codages peut être dépendante du glossaire auquel appartient le mot pour lequel on cherche l'adaptation des codages. En d'autres termes, certains codages particuliers seront retenus pour traiter les mots appartenant à un glossaire spécifique. Ces codages peuvent être différents selon le glossaire considéré, mais aussi la catégorie de produit, ou bien encore la langue de la description.

En pratique, il existe une quasi infinité de codages possibles parmi lesquels certains sont détaillés ci-après.

Ainsi, certains codages peuvent prendre en considération les mots situés avant ou après le mot pour lequel le codage est élaboré. Plus précisément, un premier codage peut consister à identifier les mots ou les glossaires auxquels appartiennent les mots se trouvant jusqu'à un nombre d'emplacements déterminés après ou avant le mot pour lequel le codage est élaboré. Autrement dit, on observe quels sont les mots avoisinants d'un terme appartenant à un glossaire, pour en tirer des conclusions sur le degré de pertinence du terme considéré en tant que caractéristique de l'article.

Un codage plus sophistiqué peut consister à combiner le codage évoqué précédemment, à la fois pour les mots se trouvant avant et après le terme étudié.

Un autre type de codage peut consister à dénombrer le nombre de mots qui dans la description appartiennent au même glossaire que celui auquel appartient le mot à coder, après dédoublonnage.

Dans ce cas, ce codage permet de détecter si plusieurs mots de la description correspondent au même type de caractéristique, par exemple une couleur ou une forme. Dans ce cas, la combinaison avec un autre codage peut s'avérer utile.

Un autre type de codage peut consister à affecter à un mot donné, un codage correspondant au nombre d'occurrences du mot donné dans la description du produit. Autrement dit, ce codage permet de détecter si un même terme intervient plusieurs fois dans la description, ce qui peut signifier qu'il est plus probablement une des caractéristiques principales de l'article.

Dans un autre type de codage, on peut affecter à un mot donné la position dans la description de ce mot par rapport aux autres mots appartenant au même glossaire, mais qui sont différents. Autrement dit, dans une description dans laquelle apparaissent deux termes appartenant au même glossaire, ces deux termes différents ne seront donc pas affectés du même codage, ce qui permet de discriminer différents cas de figures. Il est ainsi possible de différencier les cas où un terme correspond à une caractéristique principale de l'article ou à un accessoire ou auxiliaire.

A titre d'exemple, dans la description *"robe noire avec une ceinture rouge "*, les termes "noire" et "rouge", appartenant au même glossaire des couleurs ne recevront pas le même codage.

Un autre type de codage affecté à un mot donné peut consister à identifier les mots (ou les glossaires auxquels appartiennent les mots) situés entre le mot considéré et le premier mot appartenant au même glossaire, situé après le mot donné dans la description.

Autrement dit, dans le cas où plusieurs mots appartiennent au même glossaire, ce codage est sensible aux termes qui se trouvent situés entre ces deux mots appartenant au même glossaire. Plus précisément, ce codage permet de détecter si, entre ces deux mots appartenant au même glossaire, sont présents des termes de langage non caractérisant pour le produit, ou au contraire correspondant à une caractéristique d'une autre nature.

Ainsi, dans l'expression *"bleu ou rouge ou vert"*, les termes bleu, rouge, vert correspondent à des caractéristiques potentielles de couleur entre lesquelles se trouve une conjonction de coordination signifiant que les termes se trouvent sur le même plan d'égalité en terme de pertinence.

A l'inverse, dans l'expression *"une robe noire avec une ceinture rouge"* les termes "robe" et "ceinture" appartiennent au même glossaire du type d'article. La présence des termes "noire", qui est elle-même une caractéristique potentielle de couleur et du terme "ou" sont représentatifs d'un certain cas de figure dont on peut supposer que le second terme représentatif des caractéristiques d'articles, à savoir "ceinture", correspond à un accessoire de l'article principale à savoir "robe".

En pratique, de multiples codages peuvent être imaginés, tout en conservant le principe de l'invention.

En pratique, le procédé nécessite une étape d'apprentissage initial par le traitement manuel d'un certain nombre d'exemples, permettant de programmer le catégorisateur bi-classe.

### Description sommaire des figures

La manière de réaliser l'invention ainsi que les avantages qui en découlent ressortiront bien de la description du mode de réalisation qui suit, à l'appui de la figure annexée dans laquelle :

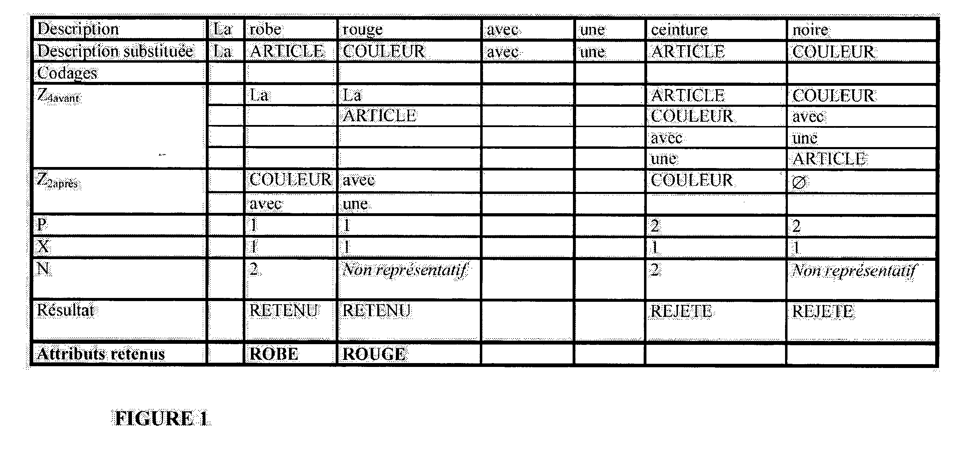

La figure 1 qui comporte un tableau illustrant le traitement conformément à l'invention d'une description de produit.

### Manière de réaliser l'invention

Comme déjà évoqué, l'invention concerne un procédé de traitement de données décrivant des produits, et plus généralement toute offre commerciale dans le but d'en extraire les attributs principaux, et ainsi permettre une recherche pertinente.

La figure 1 illustre un exemple simplifié de traitement d'une description de taille réduite, mais il va de soi que le même principe peut s'appliquer à des descriptions de taille beaucoup plus importante.

Ainsi, dans une première étape, la description est analysée afin de déterminer si chacun de ses mots appartiennent à des glossaires prédéterminés. Cette description peut subir un traitement préalable au moyen d'un lemmatiseur, consistant à substituer les mots susceptibles d'être déclinés en genre et en nombre par leur forme au masculin et au singulier.

Chacun des mots est ensuite comparé au contenu de différents glossaires, de telle sorte que dans l'exemple de la figure 1, les termes "robe" et "ceinture" sont identifiés comme appartenant au glossaire "ARTICLE" défini comme l'ensemble des articles d'habillement.

De même, les termes "rouge" et "noire" sont identifiés comme appartenant au glossaire "COULEUR" regroupant les couleurs de produits d'habillement.

Dans un premier temps, on réalise une description substituée en remplaçant chacun des mots appartenant à un glossaire par le nom du glossaire correspondant, de telle sorte que la phrase "*la robe rouge avec une ceinture noire"* est substituée par la description suivante *"la ARTICLE COULEUR avec une ARTICLE COULEUR "*.

Par la suite, les différents codages caractéristiques sont élaborés pour chacun des termes appartenant à un glossaire. Comme déjà évoqué, une infinité de codages peuvent être construits, et la description qui suit n'en retiendra qu'un nombre limité pour des questions de simplification.

Ainsi, un premier type de codage consiste à identifier les termes situés avant et après le mot considéré.

Plus précisément, il peut s'avérer avantageux, dans la catégorie des articles d'habillement, en langue française, d'identifier les termes pouvant se situer jusqu'à quatre positions avant le mot étudié, en prenant en considération le fait que le mot peut être situé en début de description, et être précédé d'un nombre de mots inférieurs à quatre. Les lignes référencées Z₄ₐᵥₐₙₜ dans le tableau de la figure 1 reprennent pour chacun des termes appartenant à un glossaire, les quatre codages correspondants.

Le même type de codage est élaboré pour déterminer les termes se situant à une ou deux positions après le mot considéré. Ces codages sont regroupés dans les lignes Z_{2après} du tableau de la figure 1.

La ligne P du tableau de la figure 1 illustre un autre type de codage élaboré pour chacun des thèmes appartenant à un glossaire. Plus précisément, ce codage consiste à identifier la position du terme considéré par rapport aux autres mots appartenant au même glossaire dans la description. Ainsi, le terme "robe", appartenant au glossaire "ARTICLE" est le premier terme de la description qui appartient à ce glossaire, le terme "ceinture" étant lui second. Le même ordre se retrouve en comparant le terme "rouge" par rapport au terme "noire".

La ligne X du tableau de la figure 1 identifie un autre type de codage, consistant à dénombrer le nombre de fois que le mot considéré apparaît dans la description. Dans l'exemple précis du tableau de la figure 1, chacun des termes appartenant à un glossaire n'apparaisse qu'une fois dans la description.

La ligne N du tableau de la figure 1 illustre un autre type de codage, considéré comme pertinent uniquement pour les mots appartenant au glossaire "ARTICLE". De la sorte, ce codage n'est pas représentatif pour les mots d'un autre glossaire, et plus particulièrement au glossaire "COULEUR". Ainsi, concernant le terme "robe", appartenant au glossaire "ARTICLE", un second terme, à savoir le terme "ceinture" appartient au même glossaire "ARTICLE", de sorte que le codage N adopte la valeur 2 pour le mot "robe".

Il en va de même pour tous les autres termes du glossaire "ARTICLE", et notamment pour le terme "ceinture".

Dans la phase d'apprentissage, l'exemple de la figure 1 est analysée pour aboutir à la conclusion que les termes "robe" et "rouge" doivent être retenus pour définir les attributs d'article et de couleur, alors qu'à l'inverse, les termes "ceinture" et "noire" seront rejetés. Cet exemple participe donc à la programmation du catégorisateur bi-classe destiné à analyser le résultat du codage.

Bien entendu, l'exemple simplifié à des fins d'illustrations de la figure 1 peut être complexifié pour correspondre à des cas de figure réels, et ce en fonctionnant avec le même principe.

On conçoit donc que le procédé conforme à l'invention présente de multiples avantages parmi lesquels :
■ son adaptabilité à différentes langues, résultant de la capacité du procédé à analyser la structure de la construction d'une description ;
■ la nécessité d'un très faible nombre d'exemples typiques destinés à l'apprentissage, en comparaison avec les procédés classiques connus à ce jour ;
■ une très grande pertinence, avec une élimination quasi complète du bruit, puisque la précision est proche de 100%.

## Revendications

1. Procédé de traitement de données mis en oeuvre par ordinateur en vue de la détermination des attributs principaux d'un produit pour son indexation et son accès par des moteurs de recherche avec une pertinence accrue, défini par une description incluant une pluralité de mots, dans lequel:
■ pour chaque mot, on détermine s'il appartient à un glossaire prédéterminé;
■ pour chaque mot appartenant à un glossaire:
◆ on affecte audit mot une pluralité de codages élaborés en fonction du glossaire prédéterminé auquel appartient ledit mot et des glossaires auxquels les autres mots de la description appartiennent,
◆ on analyse avec un catégorisateur bi-classe l'ensemble des codages élaborés pour ledit mot, pour déterminer si ledit mot est un attribut principal du produit, retenu afin d'améliorer la pertinence d'indexation.

2. Procédé selon la revendication 1, comportant une étape consistant à substituer dans la description les mots appartenant à un glossaire, par le nom dudit glossaire, puis à élaborer les codages par analyse de la description après substitution.

3. Procédé selon la revendication 1, dans lequel, pour chaque mot appartenant à un ou plusieurs glossaires,
◆ on affecte audit mot une pluralité de codages complémentaires élaborés en fonction du glossaire prédéterminé auquel appartient ledit mot, et des autres mots de la description,
◆ on analyse avec un catégorisateur bi-classe l'ensemble des codages complémentaires élaborés pour ledit mot, pour déterminer si ledit mot est un attribut principal du produit.

4. Procédé selon la revendication 1, **caractérisé en ce qu'**il comporte une étape de sélection d'un nombre restreint de codages, choisis parmi un groupe de codage potentiels.

5. Procédé selon la revendication 4, dans lequel les codages sélectionnés sont dépendant du glossaire auquel appartient ledit mot.

6. Procédé selon la revendication 1, **caractérisé en ce que** le catégorisateur bi-classe est programmé par auto-apprentissage.

7. Procédé selon la revendication 1, **caractérisé en ce qu'**un codage (Zₙ), affecté à un mot donné, consiste à identifier les mots ou les glossaires auxquels appartiennent les mots se trouvant jusqu'à n emplacements après ou avant ledit mot donné dans la description.

8. Procédé selon la revendication 1, **caractérisé en ce qu'**un codage (Zₙₘ), affecté à un mot donné, consiste à identifier les mot ou les glossaires auxquels appartienent les mot se trouvant jusqu'à n emplacements après ledit mot donné, et les mots ou les glossaires auxquels appartiennent les mots se trouvant jusqu'à m emplacements avant ledit mot donné dans la description.

9. Procédé selon la revendication 1, **caractérisé en ce qu'**un codage (A) affecté à un mot donné, consiste à identifier les mots ou les glossaires auxquels appartiennent les mots situés entre ledit mot donné et le premier mot appartenant au même glossaire situé après le mot donné dans la description.

10. Procédé selon la revendication 1, **caractérisé en ce qu'**un codage (X) affecté à un mot donné, consiste à dénombrer le nombre d'occurrence dudit mot donné dans la description du produit.

11. Procédé selon la revendication 1, **caractérisé en ce qu'**un codage (N) affecté à un mot donné consiste à dénombrer le nombre de mots dans la description appartenant au même glossaire que celui auquel appartient ledit mot donné, et qui sont différents dudit mot donné.

12. Procédé selon la revendication 1, **caractérisé en ce qu'**un codage (P) affecté à un mot donné, consiste à identifier la position dans la description dudit mot donné par rapport aux autres mots appartenant au même glossaire dans la description.

## Patentansprüche

1. Computerimplementiertes Datenverarbeitungsverfahren zum Bestimmen der Hauptattribute eines Produkts für dessen Indexierung und den Zugriff darauf durch Suchmaschinen mit erhöhter Relevanz, welches Produkt durch eine Beschreibung mit einer Mehrzahl von Worten definiert ist, wobei
• für jedes Wort bestimmt wird, ob es zu einem vorbestimmten Glossar gehört,
• für jedes Wort, das zu einem Glossar gehört,
■ dem genannten Wort eine Mehrzahl von Codierungen zugewiesen wird, die je nach vorbestimmtem Glossar, zu dem das Wort gehört, und je nach Glossaren, zu denen die weiteren Worte der Beschreibung gehören, erarbeitet werden,
■ mit einem Zwei-Klassen-Kategorisierer die Gesamtheit der für das genannte Wort erarbeiteten Codierungen analysiert wird, um zu bestimmen, ob das Wort ein Hauptattribut des Produkts ist, das festgehalten wird, um die Relevanz bei der Indexierung zu verbessern.

2. Verfahren nach Anspruch 1, umfassend einen Schritt, der darin besteht, in der Beschreibung die zu einem Glossar gehörenden Worte durch den Namen des Glossars zu ersetzen und dann die Codierungen durch Analyse der Beschreibung nach dem Ersetzen zu erarbeiten.

3. Verfahren nach Anspruch 1, wobei für jedes Wort, das zu einem oder zu mehreren Glossaren gehört,
■ dem Wort eine Mehrzahl von ergänzenden Codierungen zugewiesen wird, die je nach vorbestimmtem Glossar, zu dem das Wort gehört, und je nach den weiteren Worten der Beschreibung erarbeitet werden,
■ mit einem Zwei-Klassen-Kategorisierer die Gesamtheit der für das Wort erarbeiteten, ergänzenden Codierungen analysiert wird, um zu bestimmen, ob das Wort ein Hauptattribut des Produkts ist.

4. Verfahren nach Anspruch 1, **dadurch gekennzeichnet, dass** es einen Schritt der Auswahl einer beschränkten Anzahl von Codierungen umfasst, die aus einer Gruppe von potentiellen Codierungen ausgewählt sind.

5. Verfahren nach Anspruch 4, wobei die ausgewählten Codierungen vom Glossar abhängen, zu dem das Wort gehört.

6. Verfahren nach Anspruch 1, **dadurch gekennzeichnet, dass** der Zwei-Klassen-Kategorisierer durch Selbstlernen programmiert wird.

7. Verfahren nach Anspruch 1, **dadurch gekennzeichnet, dass** eine einem gegebenen Wort zugewiesene Codierung (Zₙ) darin besteht, die Worte bzw. Glossare zu identifizieren, zu denen die Worte gehören, die sich bis zu n Stellen nach oder vor dem gegebenen Wort in der Beschreibung befinden.

8. Verfahren nach Anspruch 1, **dadurch gekennzeichnet, dass** eine einem gegebenen Wort zugewiesene Codierung (Zₙₘ) darin besteht, die Worte bzw. Glossare zu identifizieren, zu denen die Worte gehören, die sich bis zu n Stellen nach dem gegebenen Wort befinden, sowie die Worte bzw. Glossare, zu denen die Worte gehören, die sich bis zu m Stellen vor dem gegebenen Wort in der Beschreibung befinden.

9. Verfahren nach Anspruch 1, **dadurch gekennzeichnet, dass** eine einem gegebenen Wort zugewiesene Codierung (A) darin besteht, die Worte bzw. Glossare zu identifizieren, zu denen die Worte gehören, die sich zwischen dem gegebenen Wort und dem ersten Wort befinden, das zum gleichen Glossar gehört und in der Beschreibung nach dem gegebenen Wort liegt.

10. Verfahren nach Anspruch 1, **dadurch gekennzeichnet, dass** eine einem gegebenen Wort zugewiesene Codierung (X) darin besteht, die Anzahl von Vorkommen des gegebenen Worts in der Beschreibung des Produkts festzustellen.

11. Verfahren nach Anspruch 1, **dadurch gekennzeichnet, dass** eine einem gegebenen Wort zugewiesene Codierung (N) darin besteht, die Anzahl von Worten in der Beschreibung des Produkts festzustellen, die zum gleichen Glossar wie dasjenige gehören, zu dem das gegebene Wort gehört, und die sich vom gegebenen Wort unterscheiden.

12. Verfahren nach Anspruch 1, **dadurch gekennzeichnet, dass** eine einem gegebenen Wort zugewiesene Codierung (P) darin besteht, die Stellung des gegebenen Worts in der Beschreibung bezüglich der weiteren Worte, die zum gleichen Glossar in der Beschreibung gehören, zu identifizieren.

## Claims

1. A computed implemented method for data processing with a view to determining the main attributes of a product for its indexation and its access by search engines with an enhanced relevance, defined by a description including a plurality of words in which:
• for each word, one determines whether it belongs to one predetermined glossary ;
• for each word belonging to one glossary :
· one assigns to said word a plurality of codings produced depending on the predetermined glossary to which said word belongs and glossaries to which the other words in the description belong,
· one uses a dual-class categoriser to analyse all the codings produced for said word in order to determine whether said word is a main attribute of the product, kept in order to enhance the indexation relevance.

2. A method as claimed in claim 1, comprising a stage involving substituting those words in the description which belong to a glossary by the name of said glossary, then producing codings by analysing the description after substitution.

3. A method as claimed in claim 1 in which, for each word belonging to one or more glossaries:
· one assigns to said word a plurality of additional codings produced depending on the predetermined glossary to which said word belongs and on other words in the description,
· one uses a dual-class categoriser to analyse all the additional codings produced for said word in order to determine whether said word is a main attribute of the product.

4. A method as claimed in claim 1, **characterised in that** it comprises a stage involving selecting a restricted number of codings chosen from a group of potential codings.

5. A method as claimed in claim 4, in which the selected codings depend on the glossary to which said word belongs.

6. A method as claimed in claim 1, **characterised in that** the dual-class categoriser is programmed by self-learning.

7. A method as claimed in claim 1, **characterised in that** a coding (Zₙ) assigned to a given word involves identifying the words (or the glossaries to which they belong) that are located up to n positions after or before said given word in the description.

8. A method as claimed in claim 1, **characterised in that** a coding (Zₙₘ) assigned to a given word involves identifying the words (or glossaries to which they belong) that are located up to n positions after said given word and the words (or glossaries to which they belong) that are located up to m positions before said given word in the description.

9. A method as claimed in claim 1, **characterised in that** a coding (A) assigned to a given word involves identifying the words (or the glossaries to which they belong) that are located between said given word and the first word belonging to the same glossary located after the given word in the description.

10. A method as claimed in claim 1, **characterised in that** a coding (X) assigned to a given word involves counting the number of occurrences of said given word in the description of the product.

11. A method as claimed in claim 1, **characterised in that** a coding (N) assigned to a given word involves counting the number of words in the description belonging to the same glossary as that to which the given word belongs and which are different from the given word.

12. A method as claimed in claim 1, **characterised in that** a coding (P) assigned to a given word involves identifying the position of said given word in the description compared with the other words in the description that belong to the same glossary.
